# EUROPEAN PATENT SPECIFICATION

(11) **EP 1 602 840 B1**
(45) Date of publication and mention of the grant of the patent: **24.08.2011**
(21) Application number: 05011872.8
(22) Date of filing: 01.06.2005
(51) Int. Cl.: F16C 3/10, F16C 3/14

(54) **Assembled crankshaft**
Aufgebaute Kurbelwelle
Vilebrequin en plusieurs parties

(30) Priority: 04.06.2004 JP 2004167705; 14.06.2004 JP 2004175489
(43) Date of publication of application: 07.12.2005
(73) Proprietor: Honda Motor Co., Ltd., Minato-ku Tokyo (JP)
(72) Inventor: Endoh, Tsuneo, Wako-shi Saitama (JP); Tsuboi, Takao, Wako-shi Saitama (JP); Inoue, Tsutomu, Wako-shi Saitama (JP)
(74) Representative: Trossin, Hans-Jürgen

(56) References cited:
- EP-A- 1 529 992
- WO-A-95/01515
- WO-A-95/27148
- FR-A- 889 646
- US-A- 5 195 420

## Description

The present invention relates to an improved assembled crankshaft which includes component parts of a main driving system.

From Japanese Utility Model Laid-Open Publication No. SHO-63-196816, there is known an example of an assembled crankshaft where two opposed arm sections of shaft component parts are interconnected via a crankpin having male thread portions on its opposite ends.

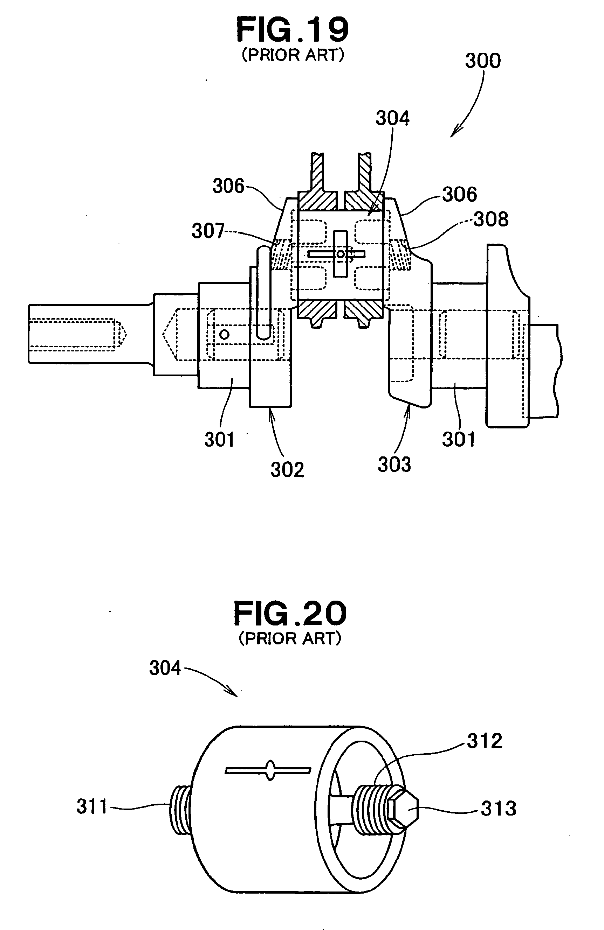

Fig. 19 hereof is a front view of the assembled crankshaft disclosed in the SHO-63-196816 publication. The known assembled crankshaft 300 includes crankshaft bodies 302 and 303 each having a journal section 301, and a separate crankpin 304 interconnecting the crankshaft bodies 302 and 303. The crankshaft body 302 includes an arm section 306 having a first female (or internal) thread hole portion 307, and the crankshaft body 303 too includes an arm section 306 having a second female thread hole portion 308.

Fig. 20 is a perspective view of the crankpin 304 having first and second male thread portions 311 and 312 on its opposite ends. The first male thread portion 311 has a left-handed male thread formed thereon for thread engagement with the first female thread hole portion 307 of the crankshaft body 302 (Fig. 19), while the second male thread portion 312 has a right-handed male thread formed thereon for thread engagement with the second female thread hole portion 308 of the crankshaft body 303 (Fig. 19). Reference numeral 313 in Fig. 20 represents a tool engaging portion formed at a distal end of the second male thread portion 312. In attaching the crankpin 304 to the crankshaft bodies 302 and 303, a tool is held and rotated on the tool engaging portion 313.

In the known crankshaft 300, where the crankshaft bodies 302 and 303 are interconnected via the crankpin 304 having the first and second male thread portions 311 and 312 axially formed on its opposite ends, respective axial forces of the first and second male thread portions 311 and 312 are unavoidably limited, so that it is difficult to increase joining forces between the crankshaft body 302 and the crankpin 304 and between the crankshaft body 303 and the crankpin 304. As a consequence, it is difficult to enhance the rigidity of the crankshaft 300, which would prevent the torque transmitting capability of the crankshaft 300 from being increased as desired. Further, because the first and second male thread portions 311 and 312 are axially threaded in the opposite directions, either the coupling between the crankshaft body 302 and the crankpin 304 or the coupling between the crankshaft body 303 and the crankpin 304 may loosen when the crankshaft 300 is rotated in one direction. Therefore, no satisfactory rotation-preventing structure can be provided in the known assembled crankshaft.

Document WO 95/01515 A discloses an assembled crankshaft according to the preamble of claim 1. The modular crankshaft described therein comprises centering means for the alignment of first to fourth crankshafts and means for an adjustable relative positioning of first to fourth crankpins. Further, the modular crankshaft also comprises releasable means for a dismountable rigid linking of the crankpins.

EP 1 529 992 A as prior art pursuant to Article 54(1) and (2) EPC, discloses an assembled crankshaft comprising: a plurality of shaft component parts (54, 53, 51), one of said shaft component parts having a journal section (57), others of said shaft component parts having respective arm sections (61, 58) supporting a crankpin (17) at opposite axial ends of the crankpin; a joint section provided in a connection between the crankpin and one of the arm sections; and a plurality of bolts (52), disposed along an imaginary circle substantially concentric to an axis of the crankpin, for axially fastening together said shaft component parts via said joint section, wherein the journal section and the crankpin each having a radius (r1, r2) greater than a distance (L) between respective axis lines of the journal section and the crankpin, wherein each of the journal section and the crankpin has a hollow interior portion (62, 59, 64), and which has a lubricating oil passage formed, in parallel to an axis line of said assembled crankshaft, for communicating between the hollow interior portions of the journal section and the crankpin. Oil is guided from the hollow interior of the crank pin to oil holes 31 a formed in a float bearing 31 fitted on the outer peripheral surface of the crankpin.

In view of the foregoing prior art problems, it is an object of the present invention to provide an improved assembled crankshaft which has an increased rigidity and torque transmitting capability by allowing various component parts thereof to be coupled or joined with each other with an increased joining force, and which can reliably prevent the joined component parts from being undesirably rotated relative to each other.

The above-described object is achieved by the invention according to claim 1.

In order to accomplish the above-mentioned object, the present invention provides an improved assembled crankshaft according to claim 1. The crankshaft comprising: a plurality of shaft component parts, a first one of the shaft component parts having a journal section, second and third ones of the shaft component parts having respective arm sections supporting a crankpin at opposite axial ends of the crankpin; a joint section provided at least either in a connection between the journal section and one of the arm sections or in a connection between the crankpin and the other of the arm sections; and a plurality of bolts, disposed along an imaginary circle substantially concentric to an axis of the journal section or the crankpin, for axially fastening together the shaft component parts in the joint section. Further, in the assembled crankshaft of the present invention, at least one of the journal section and the crankpin has a radius greater than a distance between respective axis lines of the journal section and the crankpin.

The joining force of the joint section can be increased by the axial forces of the bolts, and the thus-increased joining force can increase the rigidity and torque transmitting capability of the assembled crankshaft. Further, because the radius of at least one of the journal section and crankpin is made greater than the distance between the axis line of the journal section and the axis line of the crankpin, it is possible to increase the size of at least one of the journal section and crankpin, and the journal section and crankpin can be provided in overlapping relation to each other. Further, the joint section can have an increased sectional area, and more particularly, the end surfaces of the shaft component parts can each have an increased area, as a result of which the joint section can achieve an even further enhanced joining force. Furthermore, the increased area of the joint section allows the bolts to be arranged with increased degrees of freedom such that appropriate arrangement of the bolts can be readily selected in accordance with relative positional relationship between the overlapping journal and crankpin. Furthermore, because the shaft component parts are joined together in the joint section by means of the bolts disposed along the imaginary circle substantially concentric to the axis of the journal section or crankpin, they can be reliably prevented from rotating relative to each other.

Furthermore, according to the present invention, each of the journal section and the crankpin has a hollow interior portion, and a lubricating oil passage is formed, in parallel to the axis line of the assembled crankshaft, for communicating between the hollow interior portions of the journal section and the crankpin. With such arrangements, the shaft component parts can be efficiently fastened together in the joint section by the bolts, through the hollow interior portions, in the case where the journal section and crank pin overlap each other in the radial direction; thus, the number of the bolts can be increased, and the increased number of the bolts can enhance the joining force of the joint section. Further, because the lubricating oil passage is formed in parallel to the axis line of the assembled crankpin. Thus, when the oil is to be supplied from the hollow interior portion of the journal section to the hollow interior portion of the crankpin, the oil can be supplied uniformly to various areas in the hollow interior portion of the crankpin, so that the sliding surfaces of the crankpin can be lubricated uniformly.

In an embodiment of the present invention, at least one positioning knock pin and/or knock hole is provided on the imaginary circle along which the bolts are provided. Thus, the shaft component parts can be positioned accurately by the joint section functioning to prevent relative rotation between the shaft component parts, which can enhance the assembly accuracy of the assembled crankshaft.

In one embodiment of the present invention, the radius of the journal section is greater than the distance between the respective axis lines of the journal section and the crankpin. Thus, the journal section can have an increased diameter, so that the rigidity, resonant frequency, high-speed rotating capability and durability of the assembled crankshaft can be enhanced significantly.

The crankshaft assembly can be advantageously assembled by the following methods not forming part of the present invention.

The method for making a crankshaft assembly that includes an assembled crankshaft composed of a plurality of shaft component parts and other component parts incorporated in the assembled crankshaft comprises the steps of: making respective blanks of the shaft component parts and working the blanks of the shaft component parts to form thereon positioning sections to be used for attaching together the blanks of the shaft component parts; provisionally detachably attaching together the blanks of the shaft component parts by means of fastener means via the positioning sections, to thereby make a blank of a crankshaft; working the blank of the crankshaft to make an assembled crankshaft; and diassembling the assembled crankshaft to attach the other component parts to the diassembled crankshaft and then re-assembling the crankshaft to thereby make the crankshaft assembly.

With a conventional assembled crankshaft making method in which individual component parts are first machined and then assembled to provide a final product (i.e., assembled crankshaft), not only working errors of the individual component parts would accumulate but also assembling errors would be produced during the assembly of the machined component parts. If the assembled crankshaft is diassembled in order to attach thereto other necessary component parts and then re-assembled, assembling errors tend to be again produced, which would further lower the accuracy of the final product. Another conventional assembled crankshaft making method, in which blanks of individual component parts are first assembled and then finish-worked, can eliminate accumulated working errors of the individual component parts and assemblying errors. However, if the assembled crankshaft is diassembled and then re-assembled for some purpose, assembling errors tend to be produced as well. By contrast, the crankshaft assembly making method (which may also be referred to as "assembled crankshaft making method") as described above, characterized by forming the positioning sections, can effectively maintain a desired assembly accuracy of the individual component parts. As a result, the method as described above can eliminate the need for cumbersome positioning operation after the diassembly and re-assembly and the need for dedicated positioning jigs, so that the cost of the crankshaft assembly can be significantly reduced.

Furthermore, the other component parts are component parts of a main driving system. Thus, the crankshaft assembly with the component parts of the main driving system incorporated therein can be collectively installed into an internal combustion engine in an assembly line, and the necessary assemblying time in the assembly line can be reduced.

Moreover, the positioning sections are fitting engagement sections and rotation-preventing sections that comprise combinations of shaft sections and holes portions Such positioning sections allow the assembly accuracy of the crankshaft assembly to be significantly enhanced, and can thereby increase the number of rotations (i.e., high-speed rotating capability) and durability of the internal combustion engine.

Certain preferred embodiments of the present invention will be described in detail below, by way of example only, with reference to the accompanying drawings, in which:
Fig. 1 is a sectional view of an internal combustion engine that is provided with a crankshaft assembly manufactured by the crankshaft assembly making method not forming part of the present invention;
Fig. 2 is a sectional view of the crankshaft provided in the internal combustion engine of Fig. 1;
Figs. 3A and 3B are front views of second and third shaft members constituting the assembled crankshaft of the present invention;
Fig. 4 is a sectional view showing how a float bearing is fittingly provided in the assembled crankshaft;
Fig. 5 is an enlarged fragmentary sectional view showing how the float bearing is fittingly provided in the assembled crankshaft;
Fig. 6 is a first view explanatory of how the crankshaft of the present invention is assembled by the crankshaft assembly making method not forming part of the present invention;
Fig. 7 is a second view explanatory how the crankshaft of the present invention is assembled by the crankshaft assembly making method not forming part of the present invention;
Fig. 8 is a third view explanatory how the crankshaft of the present invention is assembled by the crankshaft assembly making method not forming part of the present invention;
Fig. 9 is a view explanatory of a first phase of the crankshaft assembly making not forming part of the present invention;
Fig. 10 is a view explanatory of a second phase of the crankshaft assembly making not forming part of the present invention;
Fig. 11 is a view explanatory of a third phase of the crankshaft assembly making not forming part of the present invention;
Fig. 12 is a view explanatory of a fourth phase of the crankshaft assembly making not forming part of the present invention;
Fig. 13 is a view explanatory of a fifth phase of the crankshaft assembly making not forming part of the present invention;
Fig. 14 is a view explanatory of a sixth phase of the crankshaft assembly making not forming part of the present invention;
Fig. 15 is a view explanatory of a seventh phase of the crankshaft assembly making not forming part of the present invention;
Section (a) of Fig. 16 is a flowchart showing the crankshaft assembly making method not forming part of the present invention, and section (b) of Fig. 16 is a flowchart showing a conventional assembled crankshaft making method;
Fig. 17A is a front view showing a shape of a preferred embodiment of the crankshaft assembled by the method not forming part of the present invention;
Fig. 17B is a front view showing a shape of a conventional assembled crankshaft;
Fig. 18 is a sectional view showing behavior of various oil holes in the assembled crankshaft of the present invention;
Fig. 19 is a front view of a conventional assembled crankshaft;
Fig. 20 is a perspective view of a crankpin of the conventional assembled crankshaft having first and second male thread portions on its opposite ends.

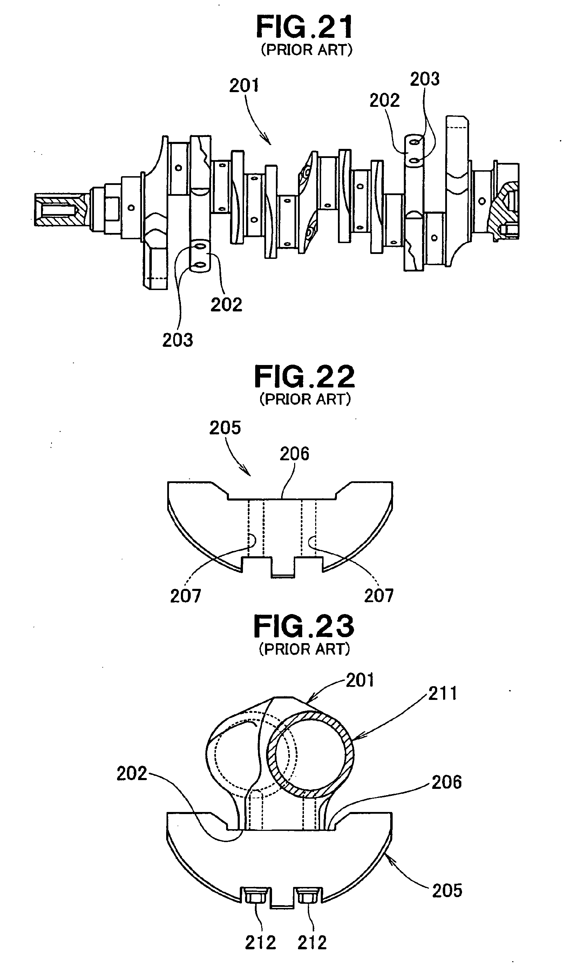

Fig. 21 is a front view showing a blank of a crankshaft body to be used for making a conventional assembled crankshaft;
Fig. 22 is a front view of a counterweight blank to be used for making the conventional assembled crankshaft; and
Fig. 23 is a view explanatory of how the counterweight blank is attached to the crankshaft body blank to provide a crankshaft blank.

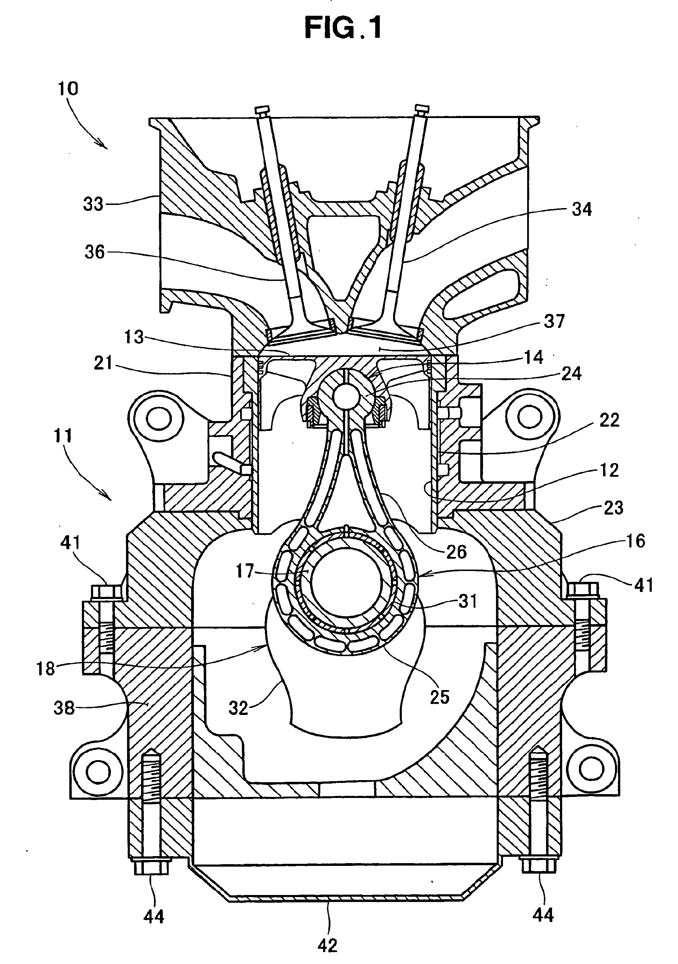

Initial reference is made to Fig. 1 showing in section an internal combustion engine including an embodiment of a crankshaft assembly made using the crankshaft assembly making method not forming part of the present invention. The internal combustion engine 10 includes a cylinder block 11, a piston 13 reciprocatably inserted in a cylinder bore 12 formed in the cylinder block 11, a connecting rod 16 connected via a spherical joint 14 to the piston 13, and an assembled crankshaft 18 rotatably provided in a lower region of the cylinder block 11 and pivotably supporting the connecting rod 16 via a hollow crankpin 17.

The cylinder block 11 has an upper cylinder section 21, a cylindrical sleeve 22 fitted in the cylinder section 21 and having the cylinder bore 12 formed therein, and an upper crankcase member 23 fixed to the lower end of the cylinder section 21.

The connecting rod 16 is a one-piece member that has a small end 24 connected to the piston 13, a big end 25 connected to the crankpin 17 via a float bearing 31 and a rod portion 26 integrally interconnecting the small end 24 and big end 25.

A plurality of counterweights (only one of which is shown in Fig. 1) 32 are secured to the assembled crankshaft 18, and a cylinder head 33 is attached to the top of the cylinder block 11 via a head gasket (not shown). Reference numeral 34 represents an intake valve, 36 an exhaust valve, and 37 a combustion chamber. Lower crankcase member 38 is secured by means of a plurality of bolts 41 to the lower end of the upper crankcase member 23, to form a crankcase. Oil pan 42 is secured by means of a plurality of bolts 44 to the lower end of the lower crankcase member 38.

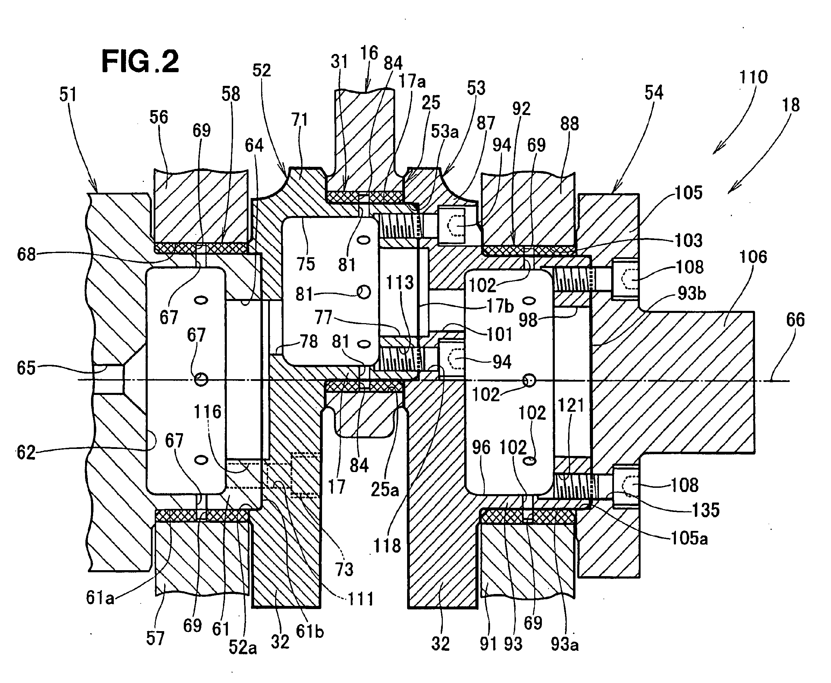

Fig. 2 is a sectional view of a preferred embodiment of the assembled crankshaft 18 of the present invention as incorporated in the internal combustion engine. The assembled crankshaft 18 includes, from one axial end to the other, a first shaft member 51, a second shaft member 52, a third shaft member 53 and a fourth shaft member 54. In the figure, the respective contours of the second and third shaft members 52 and 53, which are operatively connected to the connecting rod 16, are indicated in heavy lines to facilitate understanding of the respective shapes of the second and third shaft members 52 and 53.

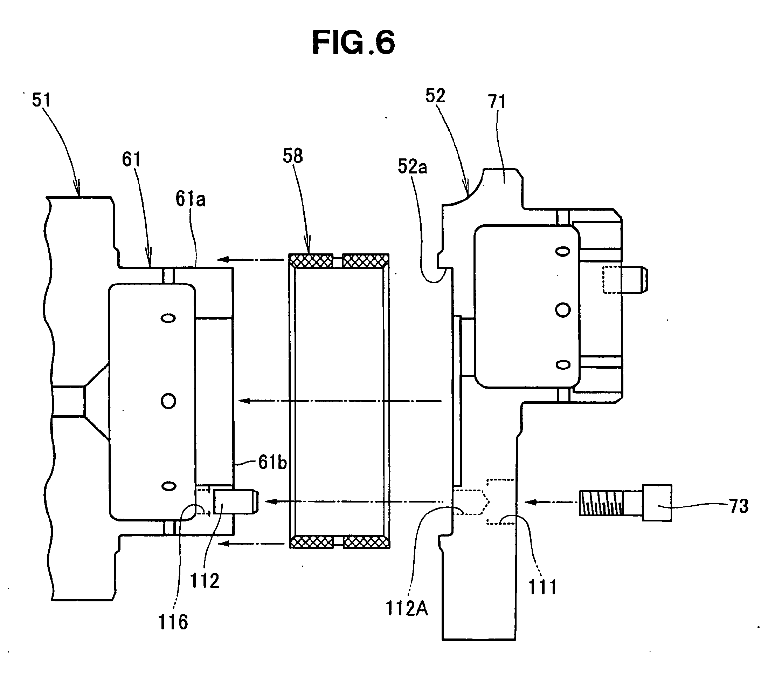

The first shaft member 51 includes a first journal section 61 supported by a first main bearing portion 56 provided at the lower end of the cylinder block 11 (see Fig. 1) and a bearing portion 57 provided on the lower crankcase member 38 (see Fig. 1), via a float bearing 58 (indicated in the figure by cross hatchings to facilitate understanding of the sectional shape of the bearing 58, and so are the other float bearings). The first shaft member 51 also includes a first knock pin 112 (not shown in the figure, but shown in Fig. 6 etc.) knocked in an end portion of the first journal section 61, and the first journal section 61 has a hollow interior portion 62. The first journal section 61 also has an end through-opening 64 communicating with the hollow interior portion 62. Oil hole 65 is formed in the crankshaft 18 to extend parallel to an axis line 66 of the crankshaft 18, and a plurality of small oil holes 67 are each formed to extend from an outer peripheral surface 61a of the first journal section 61 into the hollow interior portion 62.

The above-mentioned float bearing 58 is rotatably fitted between the outer peripheral surface 61a of the first journal section 61 and a bearing recessed portion 68 formed in the first main bearing portion 56 and bearing portion 57. The float bearing 58 has a plurality of small oil holes formed therein in communication with the small oil holes 67 of the first journal section 61 and hence the hollow interior portion 62.

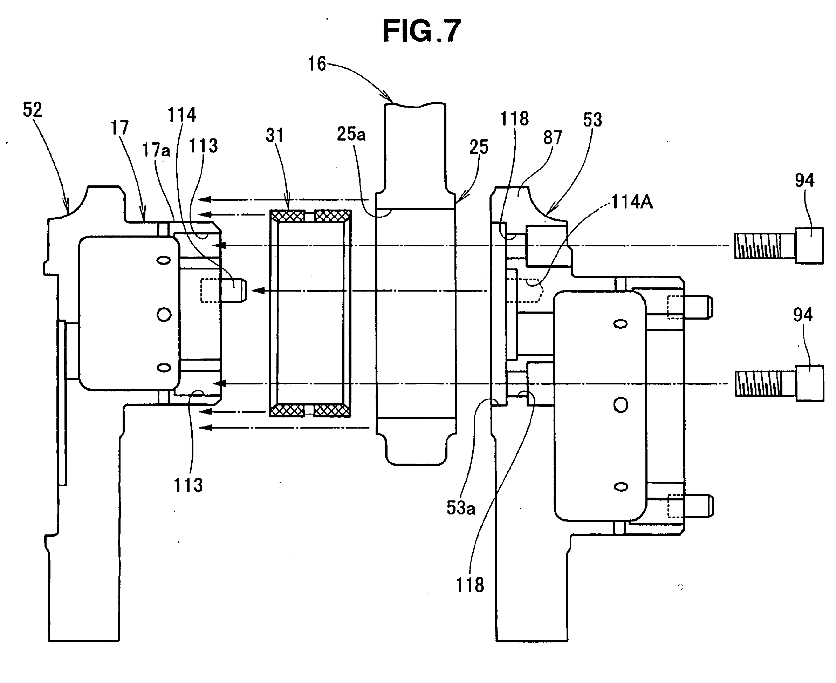

The second shaft member 52 includes an arm section 71 fitted over the first journal section 61 of the first shaft member 51, the hollow crankpin 17 provided integrally with the arm section 71 in a radially-offset relation to the axis line 66, the counterweight 32 provided integrally on a side of the arm section 71 opposite from the crankpin 17, and second knock pins 114 (not shown in the figure, but shown in Fig. 7 etc.) knocked in an end portion of the crankpin 17. The second shaft member 42 is fixed to the first journal section 61 of the first shaft member 51 by means of a plurality of bolts 73. The arm section 71 and crankpin 17 define a hollow interior portion 75. The second shaft member 52 also has an end through-opening 77 extending axially from an end of the crankpin 17 to communicate with the hollow interior portion 75. Oil hole 78 is formed to extend parallel to the axis line 66 of the crankshaft 18, and a plurality of small oil holes 81 are each formed to extend from an outer peripheral surface 17a of the crankpin 17 into the hollow interior portion 75.

The first and second shaft members 51 and 52 are positioned and fixed with respect to each other by fitting engagement between an end portion of the outer peripheral surface 61a of the first shaft member 51 and a fitting hole (or recessed) portion 52a of the second shaft member 52 as will be later detailed, and the first journal section 61 and fitting hole portion 52a are prevented, by the first knock pin, from rotating relative to each other.

The float bearing 31 is rotatably fitted between the outer peripheral surface 17a of the crankpin 17 and a hole portion 25a formed in the big end 25 of the connecting rod 16. The float bearing 31 has a plurality of small oil holes 84 in communication with the holes 81 of the second shaft member 52.

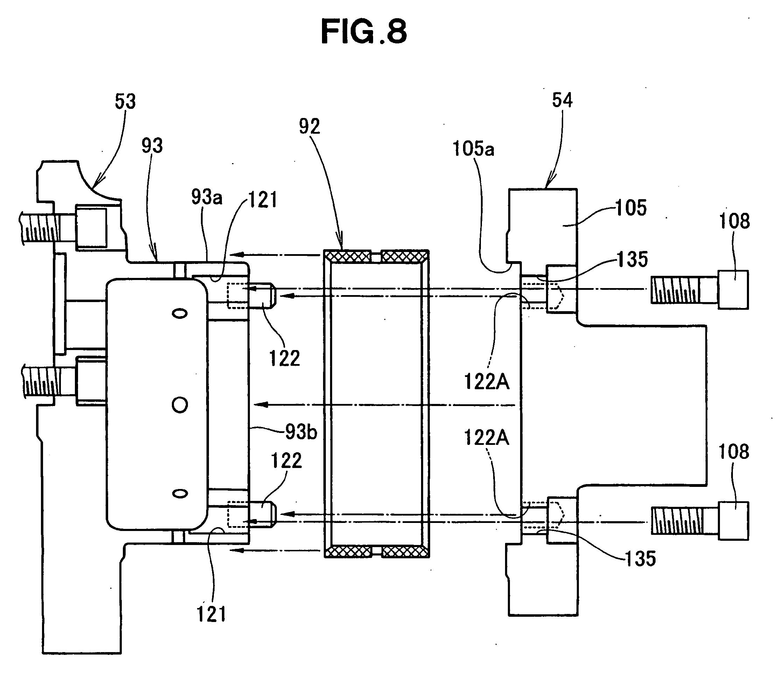

The third shaft member 53 includes an arm section 87 fitted over the crankpin 17 of the second shaft member 52, and a second journal section 93 supported, via a float bearing 92, by a second main bearing portion 88 provided at the lower end of the cylinder block 11 and bearing portion 91 provided on the lower crankcase member 38. The third shaft member 53 also includes the counterweight 32 provided integrally on the arm section 87 and third knock pins 122 (not shown in the figure, but shown in Fig. 8 etc.) knocked in an end portion of the second journal section 93, and the third shaft member 53 is fixed to the crankpin 17 of the second shaft member 52 by means of a plurality of bolts 94.

The arm section 87 and second journal section 93 define a hollow interior portion 96. The third shaft member 53 also has an end through-opening 98 extending axially from an end of the second journal section 93 to communicate with the hollow interior portion 96. Oil hole 101 is formed to extend parallel to the axis line 66 of the crankshaft 18, and a plurality of small oil holes 102 are each formed to extend from an outer peripheral surface 93a of the second journal section 93 into the hollow interior portion 96.

The second and third shaft members 52 and 53 are positioned and fixed with each other by fitting engagement between an end of the outer peripheral surface 17a of the crankpin 17 of the second shaft member 17 and a fitting hole (or recessed) portion 53a of the third shaft member 53, and the crankpin 17 and fitting hole portion 53a are prevented, by the second knock pins, from rotating relative to each other.

The float bearing 92, which is similar in construction to the float bearing 58, is rotatably fitted between the outer peripheral surface 93a of the second journal section 93 and a bearing recessed portion 103 formed in the second main bearing portion 88 and bearing portion 91.

The fourth shaft member 54 has a flange section 105 functioning as an arm section and a shaft portion 106 formed integrally with the flange section 105. The flange section 105 has a fitting hole (or recessed) portion 105a that fits with an end portion of the outer peripheral surface 93a of the second journal section 93 as will be later detailed, so that the fourth shaft member 54 is positioned relative to the third shaft member 53. The second journal section 93 and fitting hole portion 105a are prevented, by the third knock pins, from rotating relative to each other, and the fourth shaft member 54 is fixed to the second journal section 93 by means of a plurality of bolts 108.

The above-mentioned assembled crankshaft 18, float bearings 31, 58, 92 and connecting rod 16 together constitute a crankshaft assembly 110, and the piston 13 (Fig. 1) is incorporated in the crankshaft assembly 110. The crankshaft assembly 110 with the piston 13 is collectively installed into the internal combustion engine 10 of Fig. 1 in an assembly line. In an alternative, the piston 13 may be connected to the connecting rod 16 before the piston 13 and crankshaft assembly 110 are together installed into the internal combustion engine 10.

The above-described bearing mechanism supports the crankshaft 18 with respect to the cylinder block 11 and lower crankcase member 38 by means of the float bearings 58 and 92 and supports the connecting rod 16 with respect to the crankpin 17 by means of the float bearing 31. In this manner, the bearing mechanism can reduce friction produced during rotation of the crankshaft 18 and hence a friction loss of the crankshaft rotation, so as to allow the crankshaft 18 to be rotated with an enhanced efficiency.

Further, the first and second journal sections 61 and 93 have a large diameter of φ67 as compared to a diameter of the conventional journal sections which is in a range of φ45-φ55, and the crankpin 17 also has a large diameter of φ54 as compared to a diameter of the conventional crankpins which is in a range of φ30-φ40. Thus, the crankshaft 18 can have an increased rigidity and hence increased durability so that it can be rotated at increased speed.

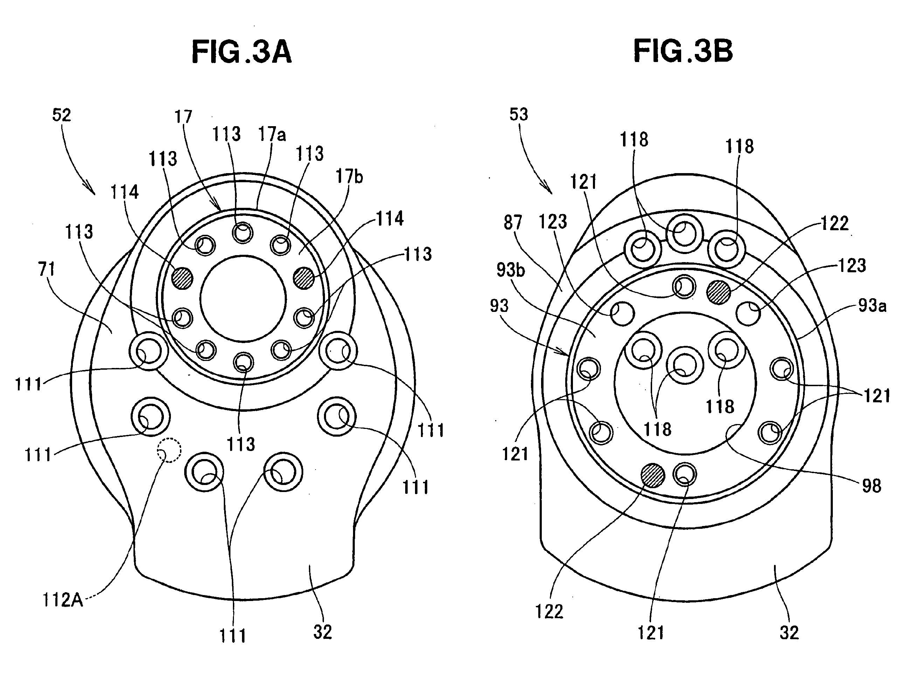

Figs. 3A and 3B are front views of the second and third shaft members 52 and 53, constituting part of the crankshaft 18 of the present invention, as viewed in a right-to-left direction of Fig. 2.

In the second shaft member 52 shown in Fig. 3A, the arm section 71 has a plurality of bolt holes 111 formed, along an imaginary circle substantially concentric to the axis of the arm section 71, for passage therethrough of corresponding ones of the bolts 73 (Fig. 2) to fasten the second shaft member 52 to the first shaft member 51 (Fig. 2). The arm section 71 also has, in its reverse side (facing the first shaft member 51), a first knock hole 112A formed, along the same imaginary circle as the bolt holes 111, to insert therein the first knock pin 112 (not shown in the figure) to prevent relative rotation between the first and second shaft members 51 and 52. Further, the crankpin 17 has, in one end surface 17b, a plurality of female (i.e., internal) thread holes 113 formed, along an imaginary circle substantially concentric to the axis of the crankpin 17, to screw therein of the bolts 94 (Fig. 2) to fasten the third shaft member 53 (Fig. 2) to the second shaft member 52, and the second knock pins 114 (indicated by hatchings, and so are the other knock pins 122) are knocked in the crankpin 17, along the same imaginary circle as the female thread holes 113, to prevent relative rotation between the second and third shaft members 52 and 53.

Referring back to Fig. 2, the first shaft member 51 has a plurality of female thread holes 116 formed in one end surface 61b thereof for screwing therein of the bolts 73.

In the third shaft member 53 shown in Fig. 3B, the arm section 87 has a plurality of bolt holes 118 formed, along an imaginary circle, for passage therethrough of the bolts 94 (Fig. 2) to fasten the third shaft member 53 to the second shaft member 52. Further, the second journal section 93 has a plurality of female thread holes 121 formed in one end surface 93b, along an imaginary circle substantially concentric to the axis of the journal section 93, for screwing of the bolts 108 (Fig. 2) to fasten the fourth shaft member 54 (Fig. 2) to the third shaft member 53, and the third knock pins 122 are knocked in the second journal section 93, along the same imaginary circle as the female thread holes 121, to prevent relative rotation between the third and fourth shaft members 53 and 54. The second journal section 93 also has a plurality of bolt holes 123 formed, along the same imaginary circle as the bolt holes 118, for passage therethrough of the bolts 94 to fasten the third shaft member 53 to the second shaft member 52. Note that the bolt holes 118 and bolt holes 123 are formed along the same imaginary circle.

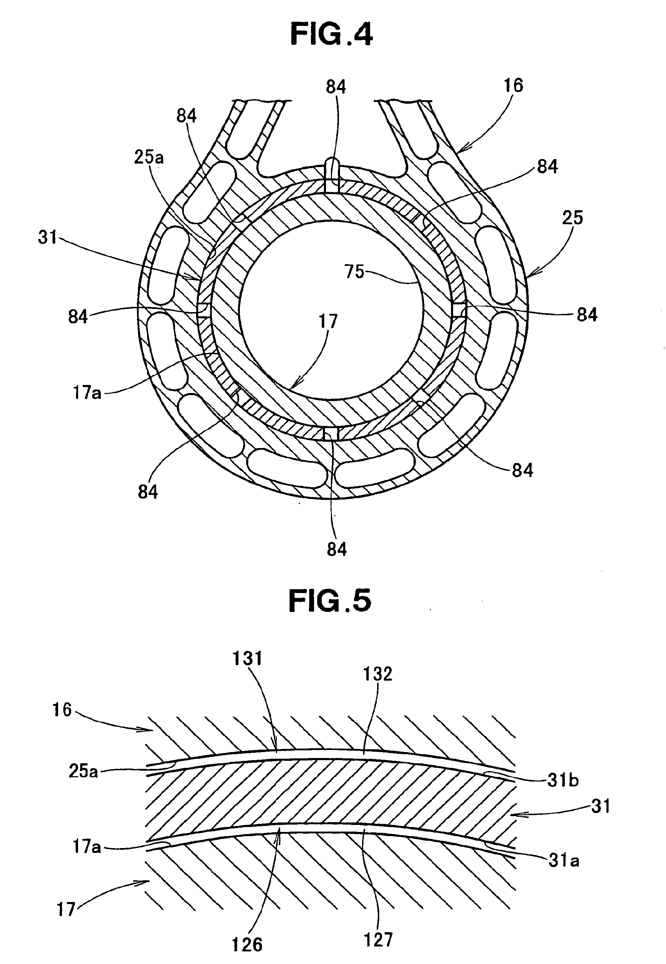

Fig. 4 is a sectional view showing a manner in which the float bearing 31 is fitted between the outer peripheral surface 17a of the crankpin 17 and the inner peripheral surface of the bid end hole portion 25a of the connecting rod 16.

The float bearing 31 has the plurality of small oil holes 84 formed therein at equal circumferential intervals. Lubricating oil is introduced from the hollow interior portion 75 of the crankpin 17, through the small oil holes 81 (Fig. 2), to these small oil holes 84, via which the lubricating oil is supplied to sliding surfaces of the float bearing 31 in abundant amount.

Fig. 5 is an enlarged fractional sectional view showing the manner in which the float bearing 31 is fitted between the outer peripheral surface 17a of the crankpin 17 and the inner peripheral surface of the bid end hole portion 25a of the connecting rod 16. Oil film 127 is formed in a space 126 between the outer peripheral surface 17a of the crankpin 17 and an inner peripheral surface 31a of the float bearing 31, another oil film 132 is formed in a space 131 between an outer peripheral surface 31b of the of the float bearing 31 and the inner peripheral surface of the bid end hole portion 25a of the connecting rod 16, and the float bearing 31 is suspended between the crankpin 17 and the bid end 25 of the connecting rod 16.

Thus, when the crankpin 17 slidingly rotates relative to the bid end 25, a sliding speed of the float bearing 31 can be reduced to an almost half of a sliding speed of the crankpin 17. Such arrangements can effectively reduce the friction and hence friction loss as compared to the conventional arrangements where the sliding bearing is fixed to the big end of the connecting rod.

Now, a description will be given about a manner in which the crankshaft 18 is assembled, with primary reference to Figs. 6 - 8.

Fig. 6 is a first view explanatory of how the crankshaft 18 of the present invention is assembled. First, the float bearing 58 is fitted over the first journal section 61 of the first shaft member 51, and then the fitting hole (or recessed) portion 52a of the second shaft member 52 is fitted onto the end of the outer peripheral surface 61a of the first journal section 61 while the first knock pin 112 knocked in the end surface 61b of the first journal section 61 is fitted into the first knock hole 112A formed in the arm section 71 of the second shaft member 52. Then, the second shaft member 52 is secured to the first shaft member 51 by the bolts 73, inserted in the bolt holes 111 of the second shaft member 52, being screwed into the female thread holes 116 of the first shaft member 51.

Fig. 7 is a second view explanatory how the crankshaft 18 of the present invention is assembled. The float bearing 31 is fitted over the crankpin 17 of the second shaft member 52, and then the big end hole portion 25a of the connecting rod 16 is fitted over the float bearing 31. After that, the fitting hole (or recessed) portion 53a of the third shaft member 53 is fitted onto the end of the outer peripheral surface 17a of the crankpin 17 while the knock holes 114A formed in the arm section 87 of the third shaft member 53 are fitted over the second knock pins 114 of the second shaft member 52. Then, the third shaft member 53 is secured to the second shaft member 52 by the bolts 94, passed through the bolt holes 118 and 123 (see Fig. 3B) of the third shaft member 53, being screwed into the female thread holes 113 of the second shaft member 52.

Fig. 8 is a third view explanatory of how the crankshaft 18 of the present invention is assembled. The float bearing 92 is fitted over the second journal section 93 of the third shaft member 53, and then the fitting hole (or recessed) portion 105a of the fourth shaft member 54 is fitted onto the end of the outer peripheral surface 93a of the second journal section 93 while the third knock pins 122 knocked in the end surface 93b of the second journal section 93 are fitted into third knock holes 122A formed in the flange section 105 of the fourth shaft member 54. Then, the fourth shaft member 54 is secured to the third shaft member 53 by the bolts 108, passed through bolt holes 135 formed in the flange section 105 of the fourth shaft member 54, being screwed into the female thread holes 121 of the third shaft member 53.

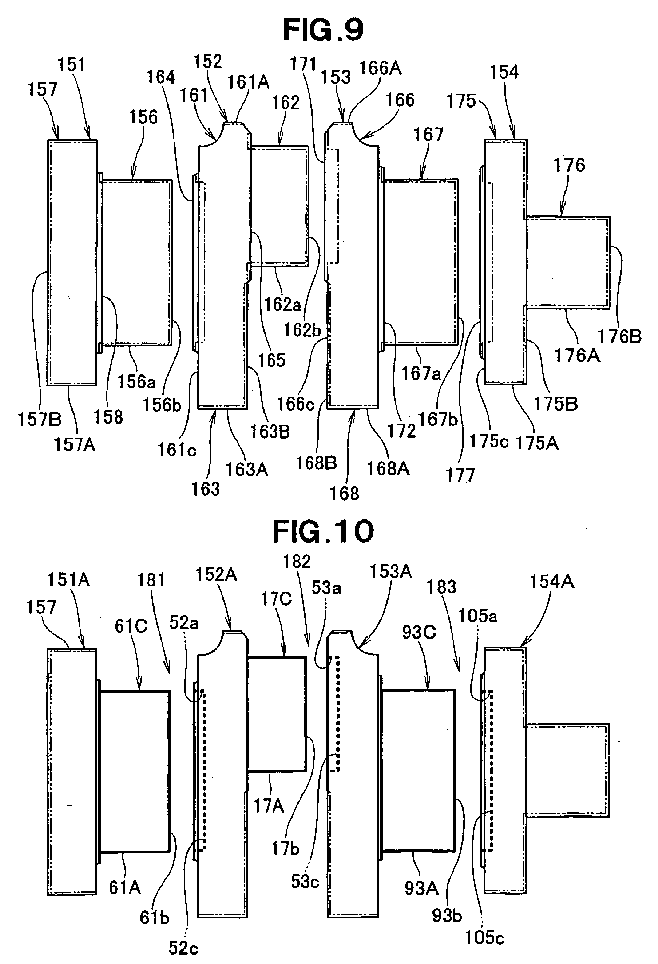

Next, a description will be given about an example of the crankshaft assembly making method not forming part of the present invention, with primary reference to Figs. 9 - 15.

Fig. 9 is a view explanatory of a first phase of the crankshaft assembly making (which may be referred to as "assembled crankshaft making") not forming part of the present invention; in Figs. 9 - 12, imaginary lines indicate a shape of the crankshaft assembly 110 finally worked. First, respective blanks 151, 152, 153 and 154 (indicated by solid lines) of the first, second, third and fourth shaft members 51, 52, 53 and 54, constituting the crankshaft 18, are made by forging, as seen in Fig. 9.

The first shaft member blank 151 includes a first journal blank portion 156, and a flange blank portion 157 formed integrally with the first journal blank portion 156. Reference numeral 158 represents a first shoulder portion of an annular shape formed between the journal blank portion 156 and the flange blank portion 157.

The second shaft member blank 152 includes an arm blank portion 161, and a crankpin blank portion 162 and counterweight blank portion 163 formed integrally with the arm blank portion 161. Reference numeral 164 represents a second shoulder portion of an annular shape slightly protruding from one side surface 161c of the arm blank portion 161, and 165 represents a third shoulder portion of an annular shape formed between the arm blank portion 161 and the crankpin blank portion 162.

The third shaft member blank 153 includes an arm blank portion 166, and a second journal blank portion 167 and counterweight blank portion 168 formed integrally with the arm blank portion 166. Reference numeral 171 represents a fourth shoulder portion of an annular shape slightly protruding from one side surface 166c of the arm blank portion 166, and 172 represents a fifth shoulder portion formed between the arm blank portion 166 and the second journal blank portion 167.

The fourth shaft member blank 154 includes a flange blank portion 175, and a shaft blank portion 176 integrally formed with the flange blank portion 175. Reference numeral 177 represents a sixth shoulder portion slightly protruding from one side surface 175c of the flange blank portion 175.

Fig. 10 is a view explanatory of a second phase of the crankshaft assembly making not forming part of the present invention; the following description will be made with primary reference to both of Figs. 9 and 10. The above-mentioned shaft member blanks 151, 152, 153 and 154 are worked to form their respective positioning sections (more specifically, combinations positioning shaft sections and hole portions). Those portions to be worked here are indicated in the figure by heavy lines.

Namely, for the first shaft member blank 151, an outer peripheral surface 156a, end surface 156b and first shoulder portion 158 of the first journal blank portion 156 are worked to form a first journal section 61C having an outer peripheral 61A and end surface 61b. The thus-worked blank is referred hereinafter as "first worked shaft member blank 151A".

For the second shaft member blank 152, the second shoulder portion 164 and outer peripheral surface 162a, end surface 162b and third shoulder portion 165 of the crankpin blank portion 162 are worked to form the fitting hole portion 52a having a bottom surface 52c and a crankpin 17C having an outer peripheral surface 17A and end surface 17b. The thus-worked blank is referred hereinafter as "second worked shaft member blank 152A".

The outer peripheral surface 61A of the first worked shaft member blank 151A and the fitting hole portion 52a of the second worked shaft member blank 152A together constitute a first fitting engagement section 181.

For the third shaft member blank 153, the fourth shoulder portion 171 and outer peripheral surface 167a, end surface 167b and fifth shoulder portion 172 of the second journal blank portion 167 are worked to form the fitting hole portion 53a having a bottom surface 53c and a second journal section 93C having an outer peripheral surface 93A and end surface 93b. The thus-worked blank is referred hereinafter as "third worked shaft member blank 153A".

The outer peripheral surface 17A of the second worked shaft member blank 152A and the fitting hole portion 53a of the third worked shaft member blank 153A together constitute a second fitting engagement section 182.

Further, for the fourth shaft member blank 154, the sixth shoulder portion 177 is worked to form a fitting hole portion 105a having a bottom surface 105c. The thus-worked blank is referred hereinafter as "fourth worked shaft member blank 154A".

The outer peripheral surface 93A of the third worked shaft member blank 153A and the fitting hole portion 105a of the fourth worked shaft member blank 154A together constitute a third fitting engagement section 183.

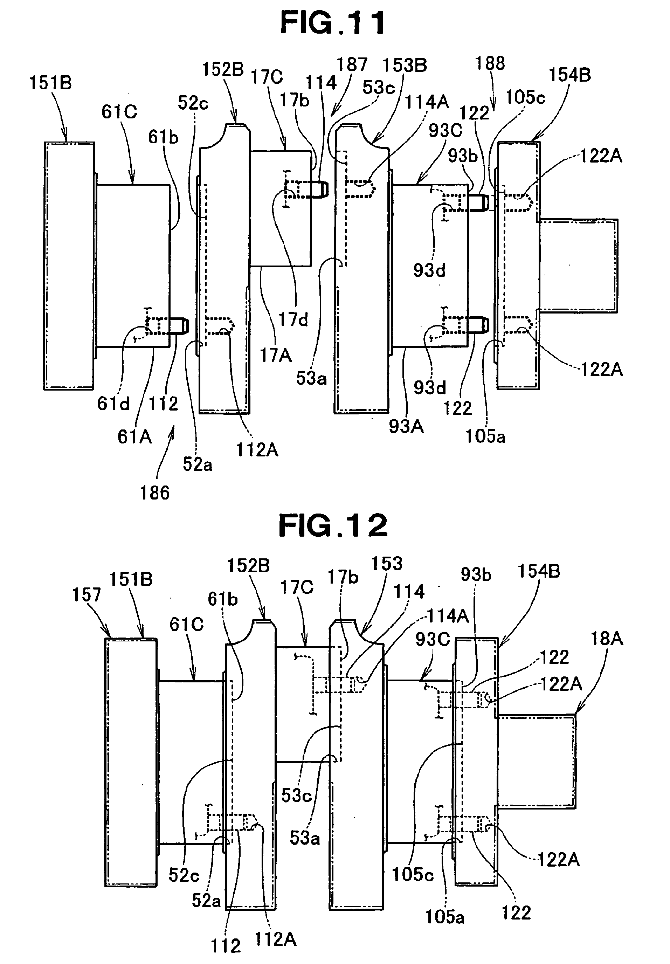

Fig. 11 is a view showing a third phase of the crankshaft assembly making not forming part of the present invention; the third phase will be described with primary reference to both Figs. 10 and 11. The first to fourth shaft member blanks 151A to 154A are worked to form their respective joining positioning sections (more specifically, shaft-and-hole rotation preventing portions). The portions to be worked here and knock pins are indicated in the figure by heavy lines.

Namely, for the first shaft member blank 151A, a first pin hole 61d for pushing therein the first knock pin 112 is formed in the end surface 61b of the first journal section 61C, and then the first knock pin 112 is pushed into the first pin hole 61d. The first shaft member blank having been worked here is referred to as "first shaft member blank 151B".

For the second shaft member blank 152A, the first knock hole 112A is formed in the bottom surface 52c of the fitting hole portion 52a, and second pin holes 17d (only one of which is shown in the figure) for pressing therein the second knock pins 114 are formed in the end surface 17b of the crankpin 17C. Then, the second knock pins 114 are each pressed into one of the second pin holes 17d. The second shaft member blank having been worked here is referred to as "second shaft member blank 152B".

The first knock pin 112 and first knock hole 112A together constitute a first rotation-preventing section 186.

For the third shaft member blank 153A, the second knock holes 114A are formed in the bottom surface 53c of the fitting hole portion 53a, and third pin holes 93d (only one of which is shown in the figure) for pushing therein the third knock pins 122 are formed in the end surface 93b of the second journal section 93C. Then, the third knock pins 122 are each pushed into the one of the third pin holes 93d. The third shaft member blank having been worked here is referred to as "third shaft member blank 153B".

The second knock pins 114 and second knock holes 114A together constitute a second rotation-preventing section 187.

Further, for the fourth shaft member blank 154A, the third knock holes 122A (only one of which is shown in the figure) are formed in the bottom surface 105c of the fitting hole portion 105a. The fourth shaft member blank having been worked here is referred to as "fourth shaft member blank 154B". The third knock pins 122 and third knock holes 122A together constitute a third rotation-preventing section 188.

Fig. 12 is a view explanatory of a fourth phase of the crankshaft assembly making not forming part of the present invention; the fourth phase will be described with primary reference to both Figs. 11 and 12. The first journal section 61C of the first shaft member blank 151B and the fitting hole portion 52a of the second shaft member blank 152B are brought into fitting engagement with each other until the end surface 61b of the first journal section 61C abuts against the bottom surface 52c of the fitting hole portion 52a. Also, the first knock pin 112 is fitted in the first knock hole 112A, and the first shaft member blank 151B and the second shaft member blank 152B are joined with each other by means of the bolts 73 (Fig. 2).

Also, the crankpin 17C of the second shaft member blank 152B and the fitting hole portion 53a of the third shaft member blank 153B are brought into fitting engagement with each other until the end surface 17b of the crankpin 17C abuts against the bottom surface 53c of the fitting hole portion 53a. Also, the second knock pins 114 are fitted in the second knock holes 114A, and the second shaft member blank 152B and the third shaft member blank 153B are joined with each other by means of the bolts 94 (Fig. 2).

Further, the second journal section 93C of the third shaft member blank 153B and the fitting hole portion 105a of the fourth shaft member blank 154B are brought into fitting engagement with each other until the end surface 93b of the second journal section 93C abuts against the bottom surface 105c of the fitting hole portion 105a. Also, the third knock pins 122 are fitted in the third knock holes 122A, and the third shaft member blank 153B and the fourth shaft member blank 154B are joined with each other by means of the bolts 108 (Fig. 2).

In the above-described manner, the first, second, third and fourth shaft member blanks 151B, 152B, 153B and 154B are axially joined with one another, which thereby provides the crankshaft blank 18A.

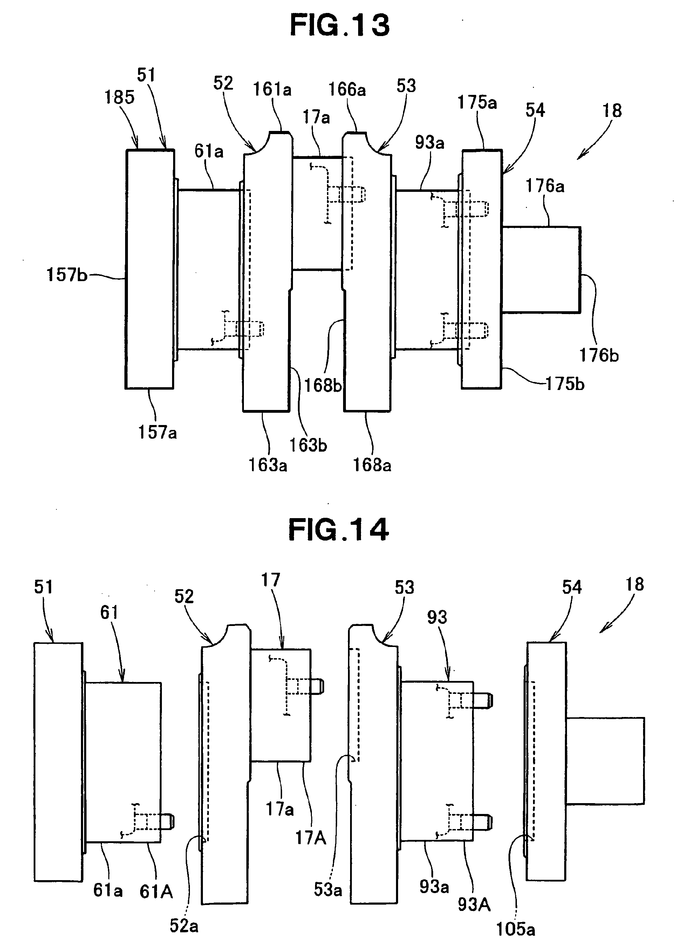

Fig. 13 is a view explanatory of a fifth phase of the crankshaft assembly making not forming part of the present invention; the fifth phase will be described with primary reference to Figs. 9, 12 and 13. Here, various parts of the crankshaft blank 18A are formed. More specifically, for the first shaft member blank 151B, an outer peripheral surface 157A and end surface 157B (Fig. 9) of the flange blank portion 157 are worked to provide a flange section 185 having an outer peripheral surface 157a and end surface 157b.

For the second shaft member blank 152B, an outer peripheral surface 161A of the arm blank portion 161, outer peripheral surface 163A of the counterweight blank portion 163 and other side surface 163B of the arm blank portion 161 and counterweight blank portion 163 are worked to form outer peripheral surfaces 161a and 163a and other side surface 163b of the second shaft member 52.

For the third shaft member blank 153B, an outer peripheral surface 166A of the arm blank portion 166, outer peripheral surface 168A of the counterweight blank portion 168 and one side surface 166c of the arm blank portion 166 and counterweight blank portion 168 are worked to form outer peripheral surfaces 166a and 168a and other side surface 168b of the third shaft member 53.

Further, for the fourth shaft member blank 154B, an outer peripheral surface 175A and other side surface 175B of the flange blank portion 175 and an outer peripheral surface 176A and end surface 176B of the shaft blank portion 176 are worked to form an outer peripheral surface 175a, other side surface 175b, outer peripheral surface 176a and end surface 176b of the fourth shaft member 54.

After the first, second, third and fourth shaft member blanks 151B, 152B, 153B and 154B have been worked as noted above, the respective outer peripheral surfaces 61A, 17A and 93A of the first journal section 61C, crankpin 17C and second journal section 93C are polished, so as to form the outer peripheral surfaces 61a, 17a and 93a. Working the crankshaft blank 18A in the above-described manner can provide the crankshaft 18 comprising the first, second, third and fourth shaft members 51, 52, 53 and 54.

Fig. 14 is a view explanatory of a sixth phase of the crankshaft assembly making not forming part of the present invention. Here, the assembled crankshaft 18 is diassembled into the first, second, third and fourth shaft members 51, 52, 53 and 54 by loosening the above-mentioned fastening bolts.

The first journal section 61 of the first shaft member 51, as shown in Fig. 14, has the outer peripheral surface 61A that is formed continuously with the outer peripheral surface 61a and that fits in the fitting hole portion 52a of the second shaft member 52, and this outer peripheral surface 61A was referred to as the "end portion" of the outer peripheral surface 61a in the foregoing description related to Fig. 2.

The crankpin 17 of the second shaft member 52, as shown in Fig. 14, has the outer peripheral surface 17A that is formed continuously with the outer peripheral surface 17a and that fits in the fitting hole portion 53a of the third shaft member 53, and this outer peripheral surface 17A was referred to as the "end portion" of the outer peripheral surface 17a in the foregoing description related to Fig. 2.

Similarly, the second journal section 93 of the third shaft member 53, as shown in Fig. 14, has the outer peripheral surface 93A that is formed continuously with the outer peripheral surface 93a and that fits in the fitting hole portion 105a of the fourth shaft member 54, and this outer peripheral surface 93A was referred to as the "end portion" of the outer peripheral surface 93a in the foregoing description related to Fig. 2.

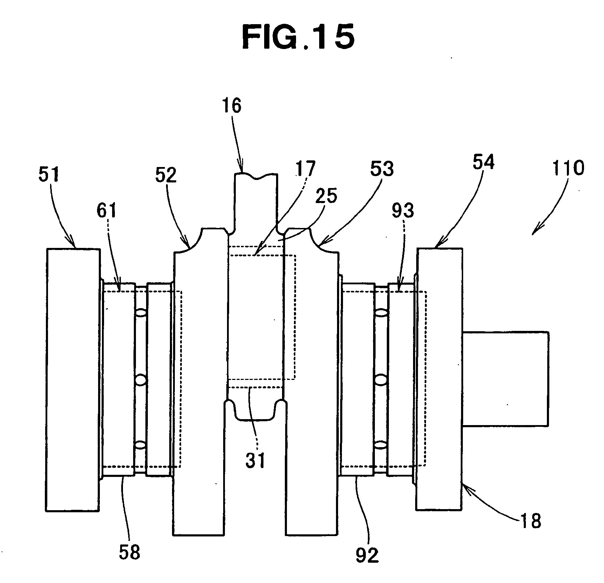

Fig. 15 is a view explanatory of a seventh phase of the crankshaft assembly making not forming part of the present invention. Here, the float bearing 58 is fitted over the first journal section 61 of the first shaft member 51, and then the first shaft member 51 is joined with the second shaft member 52. The float bearing 31 is fitted over the crankpin 17, the big end 25 of the connecting rod 16 is fitted over the float bearing 31, and then the second shaft member 52 is joined with the third shaft member 53. The float bearing 92 is fitted over the second journal section 93, and then the third shaft member 53 is joined with the fourth shaft member 54. In this manner, the crankshaft assembly 110 is provided.

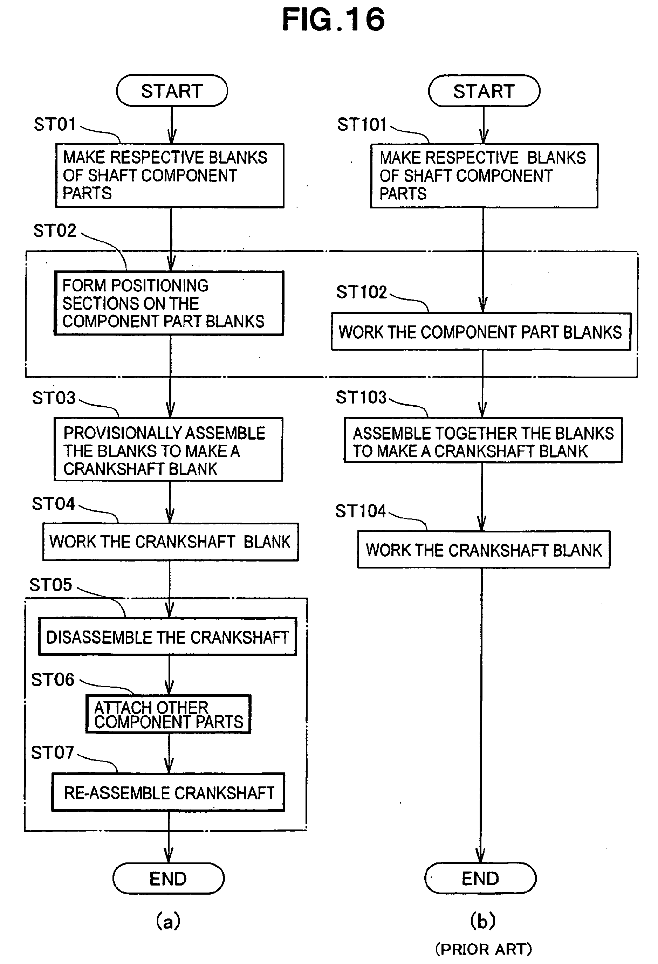

Section (a) of Fig. 16 is a flowchart showing an example sequence of steps carried out in the preferred example of the crankshaft assembly making method not forming part of the present invention, while section (b) Fig. 16 is a flowchart showing the step sequence of the above-discussed conventional assembled crankshaft making method for comparison with the example of the crankshaft assembly making method not forming part of the present invention. First, at step ST01, the blanks of the individual component parts of the crankshaft are made in the manner as described above in relation to Fig. 9. At next step ST02, the blanks of the individual component parts of the crankshaft are worked to form the positioning sections in the manner as described above in relation to Figs. 10 and 11. At following step ST03, the individual component part blanks are provisionally assembled together to make a blank of a crankshaft in the manner as described above in relation to Fig. 12.

At next step ST04, the crankshaft blank is worked in the manner as described above in relation to Fig. 13. At following step ST05, the provisionally-assembled crankshaft is diassembled in the manner as described above in relation to Fig. 14.

At step ST06, the float bearings and connecting rod are attached, as other necessary component parts, to the various parts of the diassembled crankshaft in the manner as described above in relation to Fig. 15. Then, at step ST07, the individual component parts are assembled together completely to provide the crankshaft assembly 110 in the manner as described above in relation to Fig. 15.

In the conventional assembled crankshaft making method shown in section (b) of Fig. 16, blanks of various component parts of the crankshaft assembly are made at step ST101. At next step ST102, the various component part blanks are worked in a predetermined manner. Then, at step ST103, the various component part blanks are assembled together to make a crankshaft blank. At following step ST104, the crankshaft blank is worked in a predetermined manner to provide a crankshaft assembly.

The crankshaft assembly making method not forming part of the present invention is mainly different from the conventional method in terms of the steps indicated by a heavy-line block; namely, step ST02 in the crankshaft assembly making method not forming part of the present invention significantly differs from step ST102 in the conventional method. More specifically, the individual component part blanks are worked to form the positioning sections at step ST02 in the method not forming part of the present invention, but no such positioning section is formed at step ST102 in the conventional method.

Further, the provisionally-assembled crankshaft is diassembled for attachment of the other necessary component parts and then again assembled (i.e., re-assembled) at steps ST05 - ST07 in the making method not forming part of the present invention, but no such diassembly and re-assembly is effected in the conventional making method after the crankshaft blank working at step ST104.

As set forth above in relation to Figs. 9 - 15, the crankshaft assembly making method not forming part of the present invention is directed to making the crankshaft assembly 110 having the connecting rod 16 and float bearings 31, 58 and 92 incorporated, as other necessary component parts, in the assembled crankshaft 18 composed of the first, second, third and fourth shaft members 51, 52, 53 and 54. The crankshaft assembly making method not forming part of the present invention is characterized by comprising: a first step of making the blanks 151 - 154 of the first to fourth shaft members 51 - 54, working the shaft member blanks 151 - 154 to only form the first, second and third fitting engagement sections (comprising combinations of the shaft sections and hole portions) 181, 182 and 183 as positioning sections to be used for attaching together the shaft member blanks 151 - 154, and then working the shaft member blanks 151A - 154A to form the first, second and third rotation-preventing sections (comprising combinations of the shaft sections and hole portions) 186, 187 and 188 as other positioning sections (steps ST01 and ST02 shown in section (a) of Fig. 16); a second step of provisionally assemblying together the shaft member blanks 151B - 154B by means of the bolts 73, 94 and 108 and utilizing the above-mentioned positioning sections, to thereby provide the crankshaft blank 18A (step ST03 shown in section (a) of Fig. 16); a third step of working the crankshaft blank 18A to provide an assembled crankshaft (step ST04 shown in section (a) of Fig. 16); and a fourth step of diassembling the assembled crankshaft 18, then attaching the connecting rod 16 and float bearings 31, 58 and 92 to the diassembled crankshaft component parts and then re-assembling the crankshaft 18 to thereby provide the crankshaft assembly 110 (steps ST05 -ST07 shown in section (a) of Fig. 16).

Namely, according to the crankshaft assembly making method not forming part of the present invention, the crankshaft blank 18A is provided by working the first to fourth shaft member blanks 151 - 154 or 151A - 154A to only form the positioning sections and provisionally detachably-attaching together the shaft member blanks by means of the bolts 73, 94 and 108 via the positioning sections. Thus, even if the crankshaft is diassembled and re-assembled after the above-mentioned working of the crankshaft blank 18A, the re-assembled crankshaft can still maintain a sufficiently high assembly accuracy. As a result, the method of the present invention can eliminate the need for cumbersome positioning operation after the diassembly and re-assembly and the need for dedicated positioning jigs, so that the cost of the crankshaft assembly can be significantly reduced.

The above-described crankshaft assembly making method not forming part of the present invention is particularly suited for making crankshaft assemblies for internal combustion engines where is incorporated a connecting rod integrally having a big end.

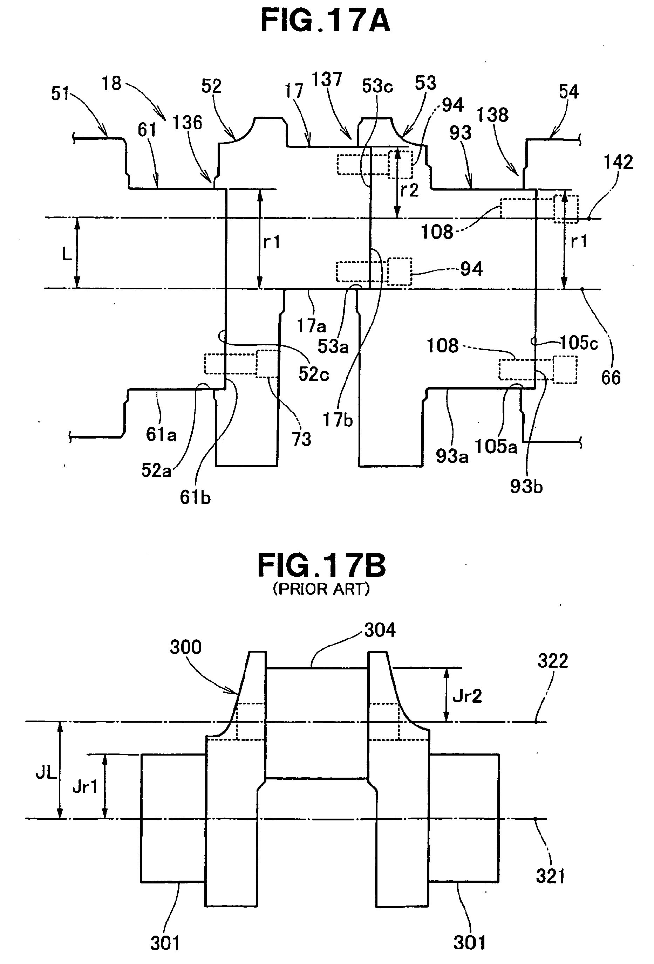

Next, a description will be given about other important aspects of the preferred embodiment the assembled crankshaft 18 of the present invention, with reference to Figs. 17A and 17B.

Figs. 17A and 17B are views explanatory of shapes of the assembled crankshaft 18 and conventional assembled crankshaft. Fig. 17A shows a shape and various dimensions of the assembled crankshaft 18 of the present invention.

Reference numeral 136 represents a first joint section, corresponding to the above-described first fitting engagement section 181 and first rotation-presenting section 186, where the first shaft member 51 and second shaft member 52 are joined to each other, and the first joint section 136 includes the outer peripheral surface 61a and end surface 61b of the first journal section 61 of the first shaft member 51 and the fitting hole portion 52a with the bottom surface 52c of the second shaft member 52.

137 represents a second joint section, corresponding to the above-described second fitting engagement section 182 and second rotation-presenting section 187, where the second shaft member 52 and third shaft member 53 are joined to each other, and the second joint section 137 includes the outer peripheral surface 17a and end surface 17b of the crankpin 17 of the second shaft member 52 and the fitting hole portion 53a with the bottom surface 53c of the third shaft member 53.

138 represents a third joint section, corresponding to the above-described third fitting engagement section 183 and third rotation-presenting section 188, where the third shaft member 53 and fourth shaft member 54 are joined to each other, and the third joint section 138 includes the outer peripheral surface 93a and end surface 93b of the second journal section 93 of the third shaft member 53 and the fitting hole portion 105a with the bottom surface 105c of the fourth shaft member 54.

Namely, in the assembled crankshaft 18, as seen from Figs, 2 and 17A, the joint sections 136, 137 and 138, joining together the first, second, third and fourth shaft members 51, 52, 53 and 54, are provided in the connection between the first journal section 61 and one of the two arm sections 71 and 87 supporting the crankpin 17 at the opposite axial ends of the crankpin 17, in the connection between the crankpin 17 and the other of the two arm sections 71 and 87, and in the connection between the second journal section 93 of the third shaft member 53 and the flange or arm section 105 of the fourth shaft member 54. The first, second, third and fourth shaft members 51, 52, 53 and 54 are connected together via these joint sections 136, 137 and 138 and by means of three sets of the fastening bolts 73, 94 and 108 each arranged along an imaginary circle substantially concentric to the axis of the journal section 61, 93 or crankpin 17. Such arrangements can increase the rigidity and torque transmitting capability of the assembled crankshaft 18.

Because the hollow interior portions 62, 96 and 75 are formed in the journal sections 61, 93 and crank pin 17, respectively, the first, second, third and fourth shaft members 51, 52, 53 and 54 are efficiently joined together in the joint sections 136, 137 and 138 by the bolts 73, 94 and 108, through the hollow interior portions 62, 96 and 75, in the case where the journal sections 61, 93 and crank pin 17 overlap each other in the radial direction of the crankshaft. Therefore, the number of the bolts can be increased, and the increased number of the bolts can even further enhance the joining forces of the joint sections 136, 137 and 138.

In Fig. 17A, the axis line of the crankshaft 18, i.e. the axis line of the first and second journal sections 61 and 93, is indicated by 66, the axis line of the crankpin 17 is indicated by 142, and a distance between these axial lines 66 and 142 is indicated by L; the distance L is equal to a half of a stroke length of the piston 13 of Fig. 1. In this case, the first and second journal sections 61 and 93 each have a radius r1 greater than the distance L (i.e., r1 > L), and the crankpin 17 has a radius r2 equal to the distance (i.e., r2 = L). The radius r2 may be greater than the distance L (i.e., r2 > L).

For comparison with the assembled crankshaft 18 of the present invention shown in Fig. 17A, Fig. 17B shows a shape and various dimensions of the conventional assembled crankshaft 300. The axis line of the crankshaft 300, i.e. the axis line of the journal section 301, is indicated by 321, the axis line of the crankpin 304 is indicated by 322, and a distance between these axial lines 321 and 322 is indicated by JL. In this case, the journal section 301 has a radius Jr1 smaller than the distance JL (i.e., Jr1 < JL), and the crankpin 304 has a radius Jr2 smaller than the distance JL (i.e., Jr2 < JL).

Namely, in the embodiment of the present invention, at least one of the radii r1 and r2 is made greater than the distance L between the axis line 66 of the first and second journal sections 61 and 93 and the axis line 142 of the crankpin 17. Thus, it is possible to increase the size of at least one of the first and second journal sections 61 and 93 and crankpin 17, and thereby increase an amount of overlap, in the radial direction, between the first and second journal sections 61 and 93 and the crankpin 17. Therefore, the first, second and third joint sections 136, 137 and 138 between the first, second, third and fourth shaft members 51, 52, 53 and 54 can each have an increased sectional area, and more particularly, the end surfaces 61b, 17b and 93b can each have an increased area, as compared to the corresponding sections in the conventional assembled crankshaft. As a result, the first, second, third and fourth shaft members 51, 52, 53 and 54 can be more effectively joined together via the joint sections 136, 137 and 138, by means of the bolts, with even further enhanced joining forces.

Further, the increased areas of the joint sections 136, 137 and 138 allow the bolts 73, 94 and 108 to be arranged with increased degrees of freedom such that appropriate arrangement of the bolts 73, 94 and 108 can be readily selected in accordance with relative positional relationship between the overlapping journals 93 and crankpin 17. Furthermore, because the first, second, third and fourth shaft members 51, 52, 53 and 54 are joined together via these joint sections 136, 137 and 138 by means of the bolts 73, 94 and 108, they can be effectively prevented from rotating relative to one another.

As readily seen from Figs. 3A, 3B, 6 - 8 and 17A, the positioning first, second and third knock pins 112, 114 and 122 and corresponding knock holes 112A, 114A and 122A are provided in such a manner that at least one of the pairs of the knock pins and knock holes is located on each of the imaginary circles along which the bolts 73, 94 and 108 are arranged. With the knock pins and knock holes, the first, second, third and fourth shaft members 51, 52, 53 and 54 can be readily appropriately fixed in position against relative rotation therebetween. As a result, the crankshaft 18 can be assembled with an enhanced efficiency and accuracy. In an alternative, at least one knock pin 112, 114, 122 or knock hole 112A, 114A, 122A, rather than at least one knock pin and knock hole, may be provided on each of the imaginary circles along which the bolts 73, 94 and 108 are arranged.

With at least one knock pin or knock hole 112, 114, 122 or knock hole 112A, 114A, 122A provided on each of the imaginary circles along which the sets of the bolts 73, 94 and 108 are arranged, the shaft members 51, 52, 53 and 54 can be positioned accurately by the joint sections 136, 137 and 138 functioning to prevent relative rotation between the shaft members, which can enhance the assembling accuracy of the assembled crankshaft 18. Further, the bolt holes 116, 118, 123 and 135 for the bolts 73, 94 and 184 and the knock holes 112A, 114A and 122A for the knock pinks 112, 114 and 122, other projections or the like can be formed with ease by a punching machine, which can thereby enhance the workability of the respective blanks.

Further, because the radius r1 of the first and second journal sections 61 and 93 is made greater than the distance L between the axial line 66 of the journal sections 61, 93 and the axial line 142 of the crankpin 17, it is possible to increase the diameters of the first and second journal sections 61 and 93 and hence the rigidity of the crankshaft 18. Thus, the resonant frequency, high-speed rotating capability and durability of the crankshaft 18 can be enhanced significantly.

In an alternative, the above-described joint section may be employed only in the connection between the first journal section 61 and one of the two arm sections 71 and 87 supporting the crankpin 17, in the connection between the crankpin 17 and the other of the two arm sections 71 and 87, or in the connection between the second journal section 93 of the third shaft member 53 and the flange or arm section 105 of the fourth shaft member 54.

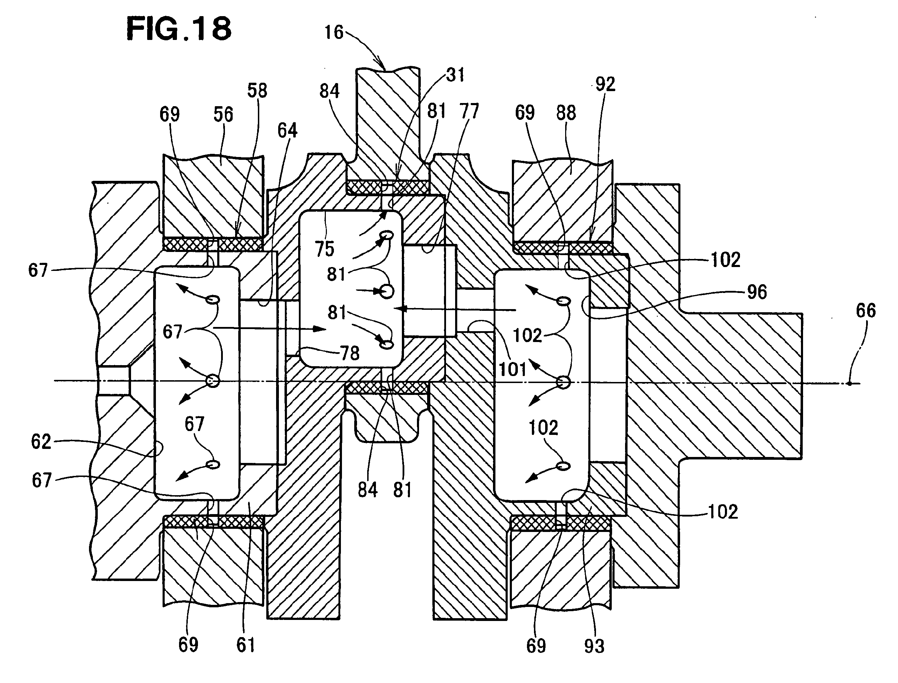

Fig. 18 is a sectional view showing behavior of the various oil holes in the assembled crankshaft 18 of the present invention. As indicated by arrows in the figure, oil is introduced from the cylinder block, via the first main bearing portion 56 and second main bearing portion 88, into the hollow interior portions 62 and 96, through the oil holes 69 of the float bearing 58, oil holes 67 of the first journal section 61, oil holes 69 of the float bearing 92 and oil holes 102 of the second journal section 93. Then, the oil introduced into the hollow interior portions 62 and 96 is supplied into the hollow interior portion 75 of the second shaft member 52 through the end through-opening 64 of the first journal section 61, oil holes 78 and 101 and end through-opening 77 as indicated by arrows in the figure, and then the oil is directed from the hollow interior portion 75, via the small oil holes 81 and 84, to the inner and outer peripheral surfaces of the float bearing 31.

If the oil holes leading from the hollow interior portions 62 and 96 to the hollow interior portion 75 are formed in inclined relation to the axis line 66, then the oil would be supplied to only a part of the hollow interior portion 75, i.e. only near the outlets of the oil holes, so that the oil supply to the float bearing 31 would undesirably become non-uniform along the circumference of the bearing 31. Therefore, in the preferred embodiment of the present invention, the oil holes 78 and 101, provided for communicating between the hollow interior portions 62 and 96 of the journal sections 61 and 93 and the hollow interior portion75, are formed in parallel to the axis line 66. Thus, when the oil is to be supplied from the hollow interior portions 62 and 96 to the hollow interior portion75, the oil can be supplied from the hollow interior portions 62 and 96 uniformly to various areas within the hollow interior portion 75, so that the oil supply to the float bearing 31 can be much more uniform along the circumference of the bearing 31, and the sliding surfaces of the crankpin 17 can be lubricated uniformly.

The above-described assembled crankshaft assembly of the present invention is suited for use in high-speed rotating internal combustion engines with a connecting rod integrally having a big end.

Joint section (136 - 138) is provided in a connection between a journal section (61) and one of two arms (71, 87) supporting a crankpin (17) and between the crankpin and the other of the arms. In each of the joint sections, a plurality of bolts (73, 94, 108) are arranged along an imaginary circle substantially concentric to the axis of the journal section or crankpin, for fastening together the components. Radius (r1, r2) of at least one of the journal section and crankpin is greater than a distance (L) between axis lines (66, 142) of the journal section and crankpin. Blanks of shaft components (51, 52, 53, 54) are worked to provide thereon positioning sections (181 - 183, 186 - 188), and the components are provisionally attached together to provide a crankshaft blank. The crankshaft blank is worked and then diassembled to attach thereto float bearings (31, 58, 92) and a connecting rod (16) integrally having a big end. Then, the crankshaft is re-assembled to make a crankshaft assembly.

## Claims

1. An assembled crankshaft comprising:
a plurality of shaft component parts (51, 52, 53, 54), one of said shaft component parts having a journal section (61), others of said shaft component parts having respective arm sections (71, 87) supporting a crankpin (17) at opposite axial ends of the crankpin;
a joint section (136, 137, 138) provided at least either in a connection between the journal section and one of the arm sections or in a connection between the crankpin and other of the arm sections; and
a plurality of bolts (73, 94, 108), disposed along an imaginary circle substantially concentric to an axis of the journal section or the crankpin, for axially fastening together said shaft component parts via said joint section,
wherein at least one of the journal section and the crankpin has a radius (r1, r2) greater than a distance (L) between respective axis lines (66, 142) of the journal section and the crankpin, **characterized in that** each of the journal section and the crankpin has a hollow interior portion (62, 75), and which has a lubricating oil passage (78) formed, in parallel to an axis line (66) of said assembled crankshaft, for communicating between the hollow interior portions of the journal section and the crankpin, and a plurality of small oil holes (81) are each formed to extend from an outer peripheral surface (17a) of the crankpin (17) into the hollow interior portion (75).

2. The assembled crankshaft of claim 1,
wherein at least one positioning knock pin (112, 114, 122) and/or knock hole (112A, 114A, 122A) is provided on the imaginary circle along which said plurality of bolts are provided.

3. The assembled crankshaft of claim 1,
wherein the radius (r1) of the journal section is greater than the distance (L) between the respective axis lines (66, 142) of the journal section and the crankpin.

## Patentansprüche

1. Zusammengesetzte Kurbelwelle, umfassend:
eine Mehrzahl von Wellenbauteilen (51, 52, 53, 54), wobei eines der Wellenbauteile einen Lagerzapfenabschnitt (61) aufweist, wobei andere der Wellenbauteile jeweilige Wangenabschnitte (71, 87) aufweisen, die einen Kurbelzapfen (17) an entgegengesetzten axialen Enden des Kurbelzapfens tragen;
einen Verbindungsabschnitt (136, 137, 138), der in einer Verbindung zwischen dem Lagerzapfenabschnitt und einem der Wangenabschnitte oder/und in einer Verbindung zwischen dem Kurbelzapfen und einem anderen der Wangenabschnitte vorgesehen ist; und
eine Mehrzahl von Bolzen (73, 94, 108), die entlang einem imaginären Kreis angeordnet sind, der im Wesentlichen konzentrisch zu einer Achse des Lagerzapfenabschnitts oder des Kurbelzapfens ist, um die Wellenbauteile über den Verbindungsabschnitt axial aneinander zu befestigen,
worin der Lagerzapfenabschnitt und/oder der Kurbelzapfen einen Radius (r1, r2) hat, der größer ist als ein Abstand (L) zwischen jeweiligen Achslinien (66, 142) des Lagerzapfenabschnitts und des Kurbelzapfens, **dadurch gekennzeichnet, dass** jeder des Lagerzapfenabschnitts und des Kurbelzapfens einen hohlen Innenabschnitt (62, 75) aufweist, und die einen Schmierölkanal (78) aufweist, der parallel zu einer Achslinie (66) der zusammengebauten Kurbelwelle ausgebildet ist, zur Verbindung zwischen den hohlen Innenabschnitten des Lagerzapfenabschnitts und des Kurbelzapfens, und eine Mehrzahl von kleinen Öllöchern (81) jeweils so ausgebildet sind, dass sie sich von einer Außenumfangsfläche (17a) des Kurbelzapfens (17) in den hohlen Innenabschnitt (75) hinein erstrecken.

2. Die zusammengesetzte Kurbelwelle von Anspruch 1,
worin zumindest ein Positionierungsstift (112, 114, 122) und/oder Positionierungsloch (112A, 114A, 122A) auf dem imaginären Kreis vorgesehen ist, entlang dem die Mehrzahl von Bolzen vorgesehen sind.

3. Die zusammengesetzte Kurbelwelle von Anspruch 1,
worin der Radius (r1) des Lagerzapfenabschnitts größer ist als der Abstand (L) zwischen den jeweiligen Achslinien (66, 142) des Lagerzapfenabschnitts und des Kurbelzapfens.

## Revendications

1. Vilebrequin assemblé comprenant :
une pluralité de parties de composant d'arbre (51 52, 53, 54), une desdites parties de composant d'arbre comportant une section de portée (61), d'autres desdites parties de composant d'arbre comportant des sections de bras (71, 87) respectives supportant un maneton (17) à des extrémités axiales opposées du maneton ;
une section de joint (136, 137, 138) disposée au moins soit dans un raccord entre la section de portée et l'une des sections de bras, soit dans un raccord entre le maneton et d'autres des sections de bras ; et
une pluralité de boulons (73, 94, 108), disposée le long d'un cercle imaginaire sensiblement concentrique avec un axe de la section de portée ou le maneton, pour arrimer ensemble axialement lesdites parties de composant d'arbre via ladite section de joint,
dans lequel au moins l'un de la section de portée et du maneton a un rayon (r1, r2) plus grand qu'une distance (L) entre des lignes d'axe (66, 142) respectives de la section de portée et du maneton,
**caractérisé en ce que** chacun de la section de portée et du maneton a une portion intérieure creuse (62, 75) et qui a un passage d'huile de lubrification (78) formé parallèlement à une ligne d'axe (66) dudit vilebrequin assemblé, pour communiquer entre les portions intérieures creuses de la section de portée et du maneton, et plusieurs petits trous d'huile (81) sont chacun formés pour s'étendre depuis une surface périphérique externe (17a) du maneton (17) dans la portion intérieure creuse (75).

2. Vilebrequin assemblé selon la revendication 1, dans lequel au moins une clavette de positionnement (112, 114, 122) et/ou un trou de clavette (112A, 114A, 122A) est disposée sur le cercle imaginaire le long duquel ladite pluralité de boulons est disposée.

3. Vilebrequin assemblé selon la revendication 1, dans lequel le rayon (r1) de la section de portée est plus grand que la distance (L) entre les lignes d'axe (66, 142) respectives de la section de portée et du maneton.
